# EUROPEAN PATENT APPLICATION

(11) **EP 2 234 378 A1**
(43) Date of publication of application: **29.09.2010**
(21) Application number: 09004116.1
(22) Date of filing: 23.03.2009
(51) Int. Cl.: H04M 1/2745

(54) **Dynamic ordering of a phonebook**

(71) Applicant: novero GmbH, 40468 Düsseldorf (DE)
(72) Inventor: Jakobsen, Jens, 45739 Oer-Erkenschwick (DE)
(74) Representative: Gesthuysen, von Rohr & Eggert

(57) **Abstract**

A method of dynamic ordering of an electronic phonebook stored in a communication device, preferably a mobile phone, wherein the phonebook contains a plurality of entries each corresponding to a name defined by a number of characters with an associated telephone number, the method comprising the steps of: providing all entries or a number of entries for dynamic ordering, measuring at least one parameter relating to at least each of the entries provided for dynamic ordering, ordering the phonebook based on the measuring of the parameter for each of the entries provided for dynamic ordering so that on a display of the communication device entries with a higher parameter score will appear before entries with a lower parameter score, as soon as a search for an entry is started by entering a first character of a name. In the inventive method the dynamic ordering is done separately for each different character in a list of selectable characters. This method reduces the average number of access steps for any specific entry.

## Description

The present invention relates to a method for dynamic ordering of an electronic phonebook stored in a communication device, preferably in a mobile phone, with the features of the generic part of claim 1.

Also this invention relates to a corresponding computer program with the features of the generic part of claim 9. Finally, this invention relates to a communication device, in particular a mobile phone, with the features of the generic part of claim 11.

In general, the present invention relates to telecommunications. The usual communication device such as a mobile phone includes an electronic phonebook also defined as a directory that allows storing a large number of entries each corresponding to a name associated with a telephone number. Those entries are typically arranged alphabetically based on the name associated with the telephone number. As soon as the volume of entries reaches a certain size which lies around 80 to 100 the number of steps to create an outgoing call from the electronic phonebook is seen as too high.

The traditional way to find a specific entry is to enter a certain number of successive characters until the entry in question is reached. If the display shows a small number of alphabetically arranged entries on the display in the final step to create the outgoing call the user might scroll through the final short-list on the display. Even with such combination of techniques a large database leads to a considerable time necessary to find the right entry.

Tle above mentioned problem has been addressed in a first prior art method (US 6, 606,381 B1). In this method entries in an electronic phonebook are ordered based on the number of calls made to and/or received from the specific phone number in the respective entry. Such dynamic ordering permits the most frequently called and/or received entries to be more accessible then less frequently called and/or received entries. This significantly reduces phonebook search time.

The prior art method also permits a user to select whether to order phonebook entries in a conventional manner or based on the dynamic ordering concept The user can selectively revert back to conventional alphabetical phonebook ordering when desired.

Further, this prior art method provides for a mode where a number of entries can be noted for locked ordering. This allows the user to lock the order of a number of entries so that they will not follow dynamic ordering. A number of entries for the same person can be grouped in locked order. The home phone number, the mobile phone number and the business phone number of one person can thus be combined to a group, which always occurs simultaneously on the display.

There are many other, however always similar proposals to better organize an electronic phonebook to achieve a more comfortable time frame to create an outgoing call (EP-A-1 690 408; US-B-7,233,650; US-A-2002/151,334).

The present invention is aimed at reducing the average number of steps necessary to create an outgoing call from an electronic phonebook stored in a comunication device.

Above mentioned problem is solved by a method with the features of the generic part of claim 1 in combination with the features of the characterizing part of claim 1.

According to the invention dynamic ordering is not done comprehensively for the complete database of the electronic phonebook. Instead dynamic ordering is done separately for each different character in a list of selectable characters. This list of selectable characters will preferably and mostly comprises the alphabetical characters A to Z. However, the list of selectable characters may include other characters, numbers etc. also.

After entering a first character the entry starting with this character and having the highest parameter score will appear at the first position of a list, typically including 2 to 10, preferably 3 to 5 entries, on the display of the communication device.

The dynamic ordering is done at least for the first character entered into the communication device. However, preferably, dynamic ordering is repeated when a second character following the first character is entered into the communication device. The group addressed with the sequence of characters will quickly become more specific.

Even with a large number of entries in the electronic phonebook this improved method of dynamic ordering will lead to a reduction of the number of steps to create an outgoing call, hereafter named the access steps.

Within the framework of the present invention a communication device, while it is preferably a mobile phone, will be any device that is operable to send and receive communication over a wireless, landline or satellite communication network such as wireless phone, landline phone, computer modem, fax machine etc. It also covers implementation of the method in a communication device that is part of a computer.

Within the framework of the present invention the term "telephone number" includes all kinds of contact data and can also include multiple telephone numbers. Further, within the framework of this invention the term "measuring a parameter" includes all kinds of measuring techniques like counting a number of occurrences or counting time of contacts etc. Measuring a parameter includes in particular a substantially continuous measurement of the respective parameter. However, within the framework of this invention, also a discontinuous measurement may be relevant.

Preferred modifications and improvements of the method of dynamic ordering of an electronic phonebook according to the invention are the subject matter of the method-claims 2 to 8.

While it is possible that the dynamic ordering is repeated as long as additional characters following the first character are entered, it is preferable that the dynamic ordering is restricted to a small number of following characters,

In the preferred version of the method according to the invention a string of characters,- at least one character and in many cases two or more characters-, is entered and all entries that fit to the entered string of characters are filtered out and then the filtered entries are displayed in the order of their parameter scores.

In a preferred and substantially improved embodiment of the invention a number of different parameters are measured for each entry provided for dynamic ordering. In this regard it is preferable that the parameter scores of the different parameters are combined equally or in a differently weighted manner to provide a combined parameter score, The entries are then displayed on the display of the communication device according to the combined parameter score.

In general the method may equally be applied to all entries in the electronic phonebook. Then no selecting step is necessary. However, it is possible to provide that not all entries in the electronic phonebook but only a number of entries in the electronic phonebook is provided for dynamic ordering. In this respect see the prior art mentioned above (US-B-6,606,381) mentioning for example the locked ordering of entries.

Preferred parameters used for dynamic ordering are:
- number of outgoing calls to the entry,
- number of incoming calls from the entry,
- total contact time with the entry,
- number of sms to the entry,
- number of sms from the entry.

Equally, if e-mails and e-mail-addresses are to be considered as entries, the number of e-mails received from or sent to the entry may be used to establish a corresponding parameter score.

As mentioned above the parameters can be weighted, e.g. giving the number of outgoing calls to the entry a higher weight then the number of sms to the entry.

In order to allow for a fast recognition of the entries displayed it is preferable that the number of entries provided for dynamic ordering that are displayed on the display of the communication device is restricted to a small number, preferably to a number below ten.

Further, it is a preferable option of the invention that irrespective of the dynamic ordering of the entries provided for dynamic ordering all entries are also ordered alphabetically, It is possible to provide that for a given character the list of entries ordered alphabetically are displayed along with the list of entries provided for dynamic ordering. Of course, for the alphabetically listed entries the start position in the list is according to the entered character or characters.

As mentioned above this invention also relates to a computer program stored on a readable memory device for ordering of an electronic phonebook stored in a communication device, preferably a mobile phone. Above mentioned problem is also solved with such computer program comprising the features of claim 9.

Preferable modifications and improvements of the computer program according to claim 9 are listed in the short-list of claim 10. Moreover, for the computer program please revert to above explanation of the method and its specifics.

Finally, the above mentioned problem is also addressed with a communication device, in particular a mobile phone, comprising the features of claim 11. Claim 12 covers all kinds of options in relation to the communication device. Again, as for an explanation of the communication device please revert to the explanation of the method above.

A preferred embodiment of the present invention is described further below with reference to the attached drawings. In the drawing
- Fig. 1: is a schematic diagram illustrating a typical communication device according to the prior art,
- Fig. 2: is a schematic diagram of a touch screen display of an advanced communication device with a split screen display below.

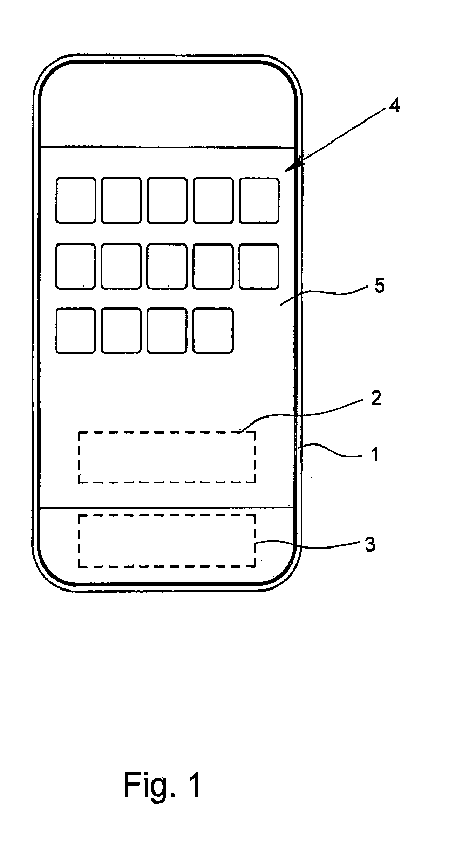

As illustrated in Fig. 1 the method of the present invention is preferably implemented in a communication device, preferably in a mobile phone 1. However, it is clear that the method may be implemented in any communication device that is operable to send and receive communications that need operation of an electronic phonebook.

In Fig. 1 the mobile phone 1 comprises, among other conventional elements, at least one processor 2. The processor 2 is programmed to perform the dynamic ordering functions described herein, obviously amongst other functions. Further provided is at least one memory 3 coupled with the processor 2 or a further processor for storing phonebook entries and other data described herein. Further, the processor 2 or a further processor of the communication device 1 is coupled with at least one input device 4. This is here a touch screen input device 4, which at present is state of the art. However, any conventional input device such as an alphanumeric keypad, a scrolling device or the like may be used. Finally Fig. 1 shows at least one display 5, which here is a full screen display, which also provides the touch screen input device 4.

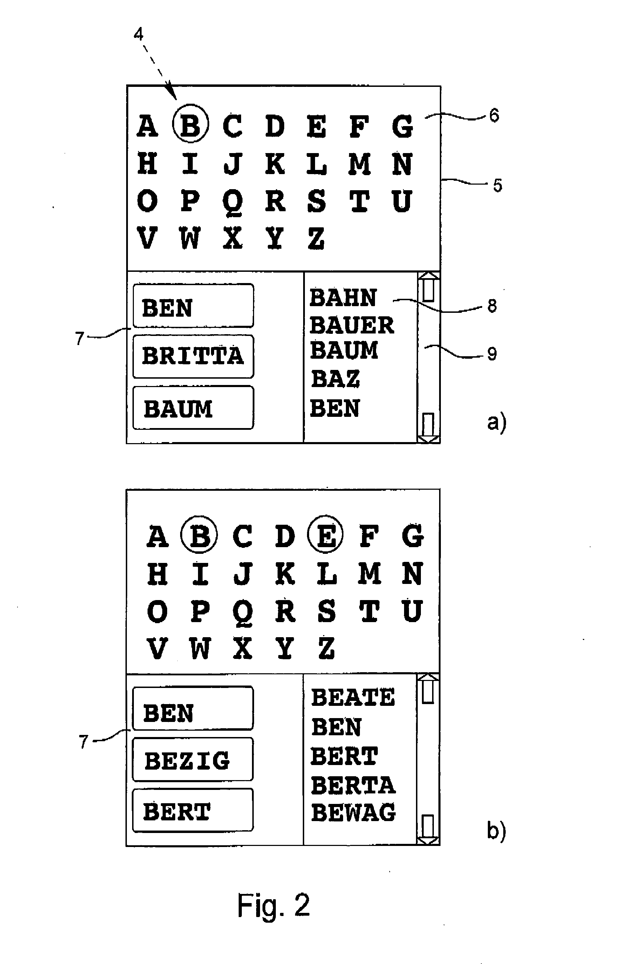

Fig. 2 shows an example of the display 5.

The processor 2 or a number of processors in the communication device in combination with the memory 3 or a number of memories of the communication device, the input device 4 and the display 5 realizes the method of dynamic ordering of the electronic phonebook in this communication device 1. Means for performing the different method steps are realized within the processor means.

The electronic phonebook stored in the memory 3 of the communication device 1 contains a plurality of entries each corresponding to a name defined by a number of characters with an associated telephone number. Please note the introduction of the description for the general meaning of the term "telephone number".

Fig. 2 of the drawing shows above in a) the split screen of the display 5. In the upper field 6 of the split screen the list of selectable characters comprising the alphabetical characters A to Z is displayed. In general, the list of selectable characters may comprise other items like numbers or else. The selection of characters will depend on local or cultural practice also.

The lower part of the split screen shows a left lower field 7 and a right lower field 8 as well as a scroll bar 9 next to the right lower field 8.

The programming of the communication device is such that all entries or a number of entries are provided for dynamic ordering. At least one parameter relating to at least each of the entries that are provided for dynamic ordering is measured. Such parameter can be selected from a large group of parameters, primarily the group containing the parameters
- number of outgoing calls to the entry,
- number of incoming calls from the entry,
- total contact time with the entry,
- number of sms to the entry,
- number of sms from the entry.

The phonebook of the communication device is ordered based on the measuring of the parameter for each of the entries provided for dynamic ordering and the result is that on the display 5 of the communication device 1 entries with a higher parameter score appear before entries with a lower parameter score as soon as a search for an entry is started by entering a first character of a name into the input device 4.

In Fig. 2a on the split screen upper field 6 the letter "B" has been entered by the touch screen input device 4, This leads to a display in the left lower field 7 of the first three entries beginning with the letter "B" and provided for dynamic ordering.

It can be seen that dynamic ordering is done separately for each different character in a list of selectable characters, here the alphabetical characters A to Z. The selected character is "B" and the entries with the highest parameter score "Ben, Baum, Britta" are displayed.

Irrespective of the dynamic ordering of the entries reflected by the display in the left lower field 7 all entries are also ordered alphabetically. In Fig. 2a the display of the list of entries ordered alphabetically can be seen in the right lower field 8. The list of entries ordered alphabetically is displayed along with the list of entries provided for dynamic ordering in the left lower field 7. In the right lower field 8 we find the names "Bahn, Bauer, Baum, Baz, Ben". The last entry in the right lower field 8 is the entry "B" with the highest parameter score, because it occurs in the left lower field 7 in the first place.

The scroll bar 9 next to the right lower field 8 allows conventional scrolling through the alphabetical list of entries for this character or possibly the complete list depending on implementation.

As can be seen from Fig. 2a and 2b the dynamic ordering is done for the first character (here "B") entered into the input device 4 of the communication device 1, but is repeated when a second character (here "E") following the first character is entered. Fig. 2b shows the result.

The priority list in the left lower field 7 of Fig. 2b shows "Ben" like the list in Fig. 2a, but then "Bezig" instead of "Baum". The reason is that "Bezig" is a member of the list of entries provided for dynamic ordering and beginning with "BE" and in this group "Bezig" has the second highest parameter score.

The alphabetical list in the right lower field 8 shows that the alphabetical list of entries beginning with "BE" is much longer. It can be scrolled through by means of the scroll bar 9.

Of course, the efficiency of the dynamic ordering method leads to the recommendation to restrict dynamic ordering to a number of following characters, although in principle there is no limit to the number of following characters for this method.

In the preferred version of the present invention a string of characters, - at least one character and in many cases two or more characters -, is entered and all entries that fit to the entered string of characters are filtered out and then the filtered entries are displayed in the order of their parameter scores

By means of the software in the communication device it is also possible that a number of different parameters are measured for each entry provided for dynamic ordering, the parameter scores of the different parameters are combined equally or in a differently weighted manner to provide a combined parameter score and the entries are displayed on the display of the communication device according to the combined parameter score.

In the preferred embodiment illustrated in Fig. 2 it can be seen that the number of entries provided for dynamic ordering that are displayed in the left lower field 7 is restricted to 3 while the display in the right lower field 8 for the alphabetical list is restricted to 5.

It can be obtained from Fig. 2 also that the start position in the alphabetical list is selected according to the entered characters.

The result of the invention is that a call to most entries can be initiated with three access steps at most. For many people this means that about 90% of all calls can be done with two or three access steps.

While the method of dynamic ordering according to the invention has been explained in detail above, it is to be noted that the invention also covers a computer program that is programmed to perform those method steps as well as a communication device incorporating the computer program on corresponding hardware in order to perform the inventive method of dynamic ordering.

The computer program according to the invention comprises a selection routine for providing all entries or a number of entries for dynamic ordering, a measuring routine for measuring a parameter relating to at least each of the entries provided for dynamic ordering, an ordering routine for ordering the phonebook based on the measuring of the parameter in the measuring routine so that on a display of the communication device entries with a higher para meter score will appear before entries with a lower parameter score as soon as a search for an entry is started by entering a first character of a name.

In a preferred version of the inventive method the computer program will first filter out all entries that fit to the entered characters, Then the filtered entries will be displayed in the order of their parameter scores,

In the communication device according to the invention the processor 2 wherein a processor 2 comprises means for providing all entries or a number of entries for dynamic ordering, for measuring at least one parameter relating to at least each of the entries provided for dynamic ordering, for ordering the phonebook in the memory 3 based on the measuring of the parameter for each of the entries provided for dynamic ordering and for displaying on the display 5 of the communication device entries with a higher parameter score at a position before entries with a lower parameter score as soon as a search for an entry is started by entering a first character of a name by means of an input device 4. In this processor 2 the means for dynamic ordering of the entries are programmed to provide dynamic ordering separately for each different character in a list of selectable characters.

## Claims

1. A method of dynamic ordering of an electronic phonebook stored in a communication device, preferably a mobile phone,
wherein the phonebook contains a plurality of entries each corresponding to a name defined by a number of characters with an associated telephone number, the method comprising the steps of:
providing all entries or a number of entries for dynamic ordering,
measuring at least one parameter relating to at least each of the entries provided for dynamic ordering,
ordering the phonebook based on the measuring of the parameter for each of the entries provided for dynamic ordering so that on a display of the communication device entries with a higher parameter score will appear before entries with a lower parameter score, as soon as a search for an entry is started by entering a first character of a name,
**characterized in that**
the dynamic ordering is done separately for each different character in a list of selectable characters.

2. The method according to claim 1, **characterized in that**
the list of selectable characters comprises the alphabetical characters A to Z.

3. The method according to claim 1 or 2, **characterized in that**
the dynamic ordering is done at least for the first character entered into the communication device and is, preferably, repeated when a second character following the first character or further following characters are entered into the communication device.

4. The method according to claim 1 or 2, **characterized in that**
a string of characters, - at least one character and in many cases two or more characters -, is entered and all entries that fit to the entered string of characters are filtered out and
then the filtered entries are displayed in the order of their parameter scores.

5. The method according to any one of the preceding claims, **characterized in that**
a number of different parameters are measured for each entry provided for dynamic ordering, and,
preferably, the parameter scores of the different parameters are combined equally or in a differently weighted manner to provide a combined parameter score and the entries are displayed on the display of the communication device according to the combined parameter score.

6. The method according to any one of the preceding claims, **characterized in that**
the parameters are selected from the group containing the parameters:
- number of outgoing calls to the entry,
- number of incoming calls from the entry,
- total contact time with the entry,
- number of sms to the entry,
- number of sms from the entry.

7. The method according to any one of the preceding claims, **characterized in that**
the number of entries provided for dynamic ordering that are displayed on the display of the communication device is restricted to a small number, preferably to a number below 10, most preferably to 3 to 5,

8. The method according to any one of the preceding claims, **characterized in that**
irrespective of the dynamic ordering of the entries provided for dynamic ordering all entries are also ordered alphabetically,
wherein, preferably, on the display of the communication device for a given character the list of entries ordered alphabetically is displayed along with the list of entries provided for dynamic ordering.

9. A computer program stored on a readable memory device for ordering of an electronic phonebook stored in a communication device, preferably a mobile phone,
wherein the phonebook contains a plurality of entries each corresponding to a name with an associated telephone number,
the computer program comprising:
a selection routine for providing all entries or a number of entries for dynamic ordering,
a measuring routine for measuring a parameter relating to at least each of the entries provided for dynamic ordering,
an ordering routine for ordering the phonebook based on the measuring of the parameter in the measuring routine so that on a display of the communication device entries with a higher parameter score will appear before entries with a lower parameter score as soon as a search for an entry is started by entering a first character of a name,
**characterized in that**
a separate ordering routine is provided or run in the computer program for each different character in a list of selectable characters,
wherein the list of selectable characters preferably comprises the alphabetical characters A to Z.

10. A computer program according to claim 9, **characterized by** the features of the characterizing part of at least one of the claims 2 to 8,

11. Communication device, in particular mobile phone, comprising
at least one processor (2),
at least one memory (3),
at least one input device (4),
at least one display (5),
wherein data of an electronic phonebook are stored in the memory,
wherein the electronic phonebook contains a plurality of entries each corresponding to a name defined by a number of characters with an associated telephone number,
herein a processor (2) comprises means for providing all entries or a number of entries for dynamic ordering, for measuring at least one parameter relating to at least each of the entries provided for dynamic ordering, for ordering the phonebook in the memory (3) based on the measuring of the parameter for each of the entries provided for dynamic ordering and for displaying on the display (5) of the communication device entries with a higher parameter score at a position before entries with a lower parameter score as soon as a search for an entry is started by entering a first character of a name by means of an input device (4),
**characterized in that**
the means for dynamic ordering of the entries are programmed to provide dynamic ordering separately for each different character in a list of selectable characters.

12. Communication device according to claim 11, **characterized by** the features of the characterizing part of at least one of the claims 2 to 8.
